# EUROPEAN PATENT SPECIFICATION

(11) **EP 2 185 946 B1**
(45) Date of publication and mention of the grant of the patent: **21.11.2012**
(21) Application number: 08801031.9
(22) Date of filing: 18.08.2008
(51) Int. Cl.: G01T 1/178

(54) **DEVICE FOR DETERMINATION OF RADON DIFFUSION COEFFICIENT**
VORRICHTUNG ZUR BESTIMMUNG EINES RADON-DIFFUSIONSKOEFFIZIENTEN
DISPOSITIF DE DÉTERMINATION DE COEFFICIENT DE DIFFUSION DE RADON

(30) Priority: 06.09.2007 CZ 20070610
(43) Date of publication of application: 19.05.2010
(73) Proprietor: Ceske Vysoke Uceni Technicke V Praze, 166 29 Praha 6 (CZ); Statni Ustav Radiacni Ochrany, 14000 Praha 4 (CZ)
(72) Inventor: JIRANEK, Martin, 273 51 Velke Pritocno (CZ); FRONKA, Ales, 152 00 Praha 5 (CZ)
(74) Representative: Duskova, Hana
(86) International application number: PCT/CZ2008/000094
(87) International publication number: WO 2009/030182

(56) References cited:
- US-A- 5 088 316
- JIRANEK M ET AL: "New technique for the determination of radon diffusion coefficient in radon-proof membranes" RADIATION PROTECTION DOSIMETRY, NUCLEAR TECHNOLOGY PUBLISHING, GB, vol. 130, no. 1, 1 June 2008 (2008-06-01), pages 22-25, XP008108547 ISSN: 0144-8420

## Description

### Technical field of the invention

Presented solution deals with a device for determination of radon diffusion coefficient. Measuring device is intended in particular for determination of radon diffusion coefficient of insulation materials' samples and partial elements of building structures.

### Background of the invention

Existing devices for determination of radon diffusion coefficient are all based on similar design. They are always equipped with only one source container and one receiver container, usually the top one, between which the measured sample is inserted. Source of radon, usually in form of some active material, such as rocks, concrete, etc., is inserted into source container. Containers themselves are not the measuring devices as such; detector of radon and its decay products is connected to them. All known concepts use scintillation or semiconductor detectors as measuring units. Existing devices do not allow the receiver container to be ventilated during the measuring process. Radon diffusion coefficient can only be obtained by measuring the increase of radon concentration in receiver container immediately after connecting the source container; diffusion is thus measured in non-steady state.

One example of a prior art apparatus is given in US 5088316.

Existing devices and procedures for determination of radon diffusion coefficient feature numerous drawbacks. They show delayed response of detector connected to the receiver container because radon gets to the detector's sensitive area through the receiver container. Such solutions do not allow to control increase of radon concentration in source container. Another disadvantage is that radon diffusion coefficient is determined using only one of all methods available - by measuring the radon concentration in non-steady state. In addition, technical embodiments and parameters of measuring units do not allow to measure more than one sample at a time and thus to use more than one receiver container. Decontamination of polluted detectors is troublesome, too, resulting in increased background, which affects measuring accuracy of radon concentration, especially in the early stages of the build-up curve. Moreover, existing devices and methods do not allow to check and controlpressure difference between the receiver and source container.

### Summary of the invention

Disadvantages mentioned above are removed by a device for measuring the radon diffusion coefficient according to the presented solution in claim 1, which has its source section and receiver section, between which the measured sample is inserted, and also a source of radon. Principle of the new solution is that the source of radon is formed by artificial source of radon, source section is formed by source ionization chamber in flow mode, to which receiver section is attached via steel extension (12) used for fixing the measured samples. Such receiver section is formed by at least two receiver ionization chambers operating in current mode, which feature electrically conductive grid in their electrically conductive part; the grid encloses the detection volume. Receiver ionization chambers are equipped with shut-off valves as follows: the first receiver ionization chamber is equipped with the first and the second shut-off valves and the second receiver ionization chamber is equipped with the third and the fourth shut-off valves. The first and the fourth shut-off valves are connected to the first or the second diaphragm pump respectively. Source ionization chamber and receiver ionization chambers are each equipped with their own electronic device for continuous measuring and recording the radon volume activity. Source ionization chamber is equipped with both the first and the second shut-off and regulation valves, which are interconnected by a hose via the third diaphragm pump plus the artificial source of radon, and also with the first valve for connection to the first input of electronic pressure difference sensor. The first receiver ionization chamber is equipped with the second valve and the second receiver ionization chamber is equipped with the third valve for connection to the second input of electronic pressure difference sensor. Both receiver ionization chambers are interconnected with evaluation and control unit.

In one possible embodiment, described device has a single electronic pressure difference sensor and its second output allows disconnection from the second or the third valve. In other possible embodiment, both the first and the second receiver ionization chambers can each have their own electronic pressure difference sensor.

In advantageous embodiment the first shut-off valve is positioned opposite to the second shut-off valve and/or the third shut-off valve is positioned opposite to the fourth shut-off valve.

Measured sample may be fixed advantageously when the steel extension is equipped with as many bottom flanges as is the number of receiver ionization chambers, and bottom part of each receiver ionization chamber is also equipped with top flange for connection to respective bottom flange.

It is also advantageous when the interconnecting hoses between valves are made of material showing minimum radon transfer coefficient.

Presented solution features the following advantages in particular. The device allows continuous recording of radon volume activity in all receiver ionization chambers in the interval from 0.5 minute to 60 minutes. It suppresses convective component of radon transport and it allows to check and to control pressure difference between the source and receiver chambers. Two or more samples may be measured simultaneously under identical measuring conditions, especially with the same radon concentration in the source ionization chamber. The device allows to control radon concentration build-up rate in the source ionization chamber as well as the final radon concentration level in this chamber. Great advantage is that the device allows to determine the radon diffusion coefficient by all known methods, listed hereinafter, in both non-steady and steady state.

The fact that this solution allows to ventilate receiver chambers and these chambers act simultaneously also as the radon detectors significantly increases speed and accuracy of the resulting measurements of radon diffusion coefficient.

### Overview of Figures in Drawings

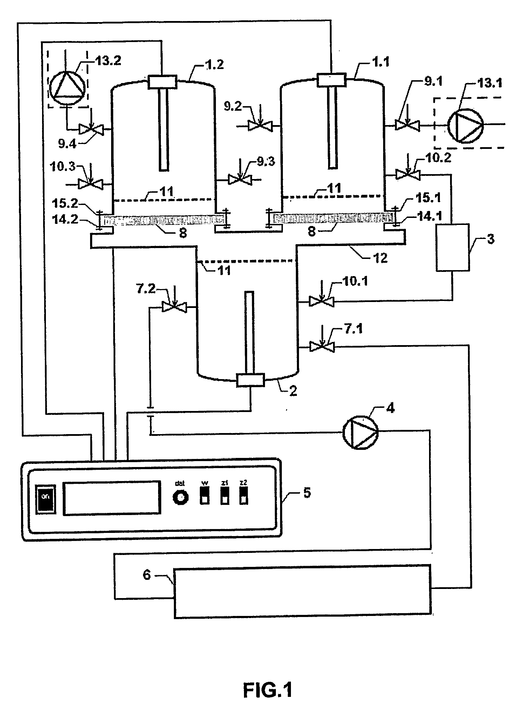

Example of a device according to the presented invention is schematically shown in the attached drawing.

### Detailed Description of the Preferred Embodiments

Device according to given example consists of three ionization chambers, i.e. from source ionization chamber 2 operating in flow mode, the first receiver ionization chamber 1.1 and the second receiver ionization chamber 1.2, both operating in current mode, and each of them feature electrically conductive grid 11 in their electrically conductive part enclosing the detection volume. Device can be created also with more than two receiver ionization chambers. Source section formed by the source ionization chamber 2 and receiver section formed by the first receiver ionization chamber 1.1 and the second receiver ionization chamber 1.2 are mutually interconnected by means of steel extension 12, which in this case is equipped with the first bottom flange 14.1 and the second bottom flange 14.2 for fixing two measured samples 8 of insulation material. Bottom part of the first receiver ionization chamber 1.1 is then equipped with the first top flange 15.1 and, analogically, bottom part of the second receiver chamber 1.2 is equipped with the second top flange 15.2, which both get fixed to relevant first bottom flange 14.1 and the second bottom flange 14.2 respectively. Prior inserting the samples 8 a silicon-based neutral sealant is applied onto bottom flanges 14.1 and 14.2. As soon as the sealant is applied, top flanges 15.1 and 15.2 of the first and the second receiver ionization chambers are moved to cover samples 8 and their position is subsequently stabilized by tightening bolts; in given example by four bolts per each receiver ionization chamber.

The first receiver ionization chamber 1.1 is equipped with the first shut-off valve 9.1 and the second shut-off valve 9.2 and, analogically, the second receiver ionization chamber 1.2 is equipped with the third shut-off valve 9.3 and the fourth shut-off valve 9.4. The first shut-off valve 9.1 is then connected to the first diaphragm pump 13.1 and the fourth shut-off valve 9.4 is connected to the second diaphragm pump 13.2. The first to the fourth shut-off valves 9.1, 9.2, 9.3 and 9.4 serve to ventilate the first and the second receiver ionization chambers 1.1 and 1.2 by means of the first and the second diaphragm pumps 13.1 and 13.2 and by air samples off-take. The first and the second diaphragm pumps 13.1 and 13.2 may be connected as either fixed or detachable, which is shown in the drawing by dashed line. Source ionization chamber 2 and the first and the second receiver ionization chambers 1.1 and 1.2 are each equipped with their own, commonly used electronic device for continuous measuring and recording of radon volume activity. Source ionization chamber 2 is also equipped with both the first shut-off and regulation valve 7.1 and the second shut-off and regulation valve 7.2 interconnected by a hose via the third diaphragm pump 4 plus artificial source of radon 6 located outside, and also with the first valve 10.1 for connection to the first input of the electronic pressure difference sensor 3. The first and the second shut-off and regulation valves 7.1 and 7.2 control the radon concentration build-up rate in source ionization chamber 2. Simultaneously, the first receiver ionization chamber 1.1 is equipped with the second valve 10.2 and the second receiver ionization chamber 1.2 is equipped with the third valve 10.3 for connection to the second input of electronic pressure difference sensor 3, such as differential pressure gauge, which measures pressure difference between receiver ionization chambers 1.1 and 1.2 and source ionization chamber 2. This electronic pressure difference sensor 3 may be designed as detachable, and therefore common for all ionization chambers, or the first and the second receiver ionization chambers 1.1, 1.2 may each have their own electronic pressure difference sensor 3. Both receiver ionization chambers 1.1, 1.2 are interconnected with evaluation and control unit 5, which processes and stores obtained data and serves as a source of stabilized operating voltage for the source ionization chamber 2 and the first and the second receiver ionization chambers 1.1 and 1.2.

To facilitate quick and efficient ventilating of receiver ionization chambers 1.1 and 1.2, it is advantageous if the first shut-off valve 9.1 is positioned opposite to the second shut-off valve 9.2 and/or the third shut-off valve 9.3 is positioned opposite to the fourth shut-off valve 9.4. All interconnecting hoses are made of material showing minimum radon transfer coefficient, such as silicon or polyethylene. The whole device is supported by steel frame, not shown in the drawing.

The device allows to determine radon diffusion coefficient in the following measurement modes.

In steady state, reached with the first and/or the second receiver ionization chamber 1.1 and/or 1.2 closed and unventilated, being closed from the start, after reaching equilibrium state, i.e. stable distribution of radon concentration in measured sample 8, such chamber is intensively ventilated. When closed again, increase curve of radon volume activity is measured.

In steady state, reached with the first and/or the second receiver ionization chamber 1.1 and/or 1.2 ventilated, such chamber is intensively ventilated from the beginning and therefore the radon concentration is maintained at zero level. After reaching equilibrium state, i.e. stable distribution of radon concentration in measured sample 8, the relevant receiver ionization chamber is closed and increase curve of radon concentration is measured.

In non-steady state, when the increase curve of radon concentration is measured immediately after radon enters into the source ionization chamber 2.

Samples 8 of measured material are gas-tightly placed between the source ionization chamber 2 and two receiver ionization chambers 1.1 and 1.2. In the source ionization chamber 2 high radon concentration is maintained by means of artificial source of radon 6, in orders of 1-100 MBq/m³. Radon diffuses through insulation from the source ionization chamber 2 to the first and the second receiver ionization chambers 1.1 and 1.2, where it is detected. Using known radon supply rate to the first receiver ionization chamber 1.1 and to the second receiver ionization chamber 1.2, the area of measured sample 8 and its thickness, it is possible to calculate the resulting radon diffusion coefficient. Standard measurement of radon concentration increase in relevant receiver ionization chamber 1.1, 1.2 may commence at any given moment.

### Industrial Applicability

Device according to the presented solution is intended in particular for testing laboratories dealing with quality of radon-proof insulations and partial elements of building structures.

## Claims

1. Device for the determination of the radon diffusion coefficient of a sample consisting of a source section and a receiver section, between which the sample is inserted, and also equipped with a source of radon (6), **characterized by** the fact that the source of radon is formed by an artificial source of radon (6), the source section is formed by a source ionization chamber (2) in flow mode, to which via a steel extension (12) for fixing the sample (8) a receiver section is attached, which is formed by at least two receiver ionization chambers (1.1 and 1.2) operating in current mode, which each comprise an electrically conductive grid (11) enclosing the detection volume and they are also equipped with shut-off valves as follows: the first receiver ionization chamber (1.1) has a first shut-off valve (9.1) and a second shut-off valve (9.2) and the second receiver ionization chamber (1.2) has a third shut-off valve (9.3) and a fourth shut-off valve (9.4), where the first shut-off valve (9.1) is connected to a first diaphragm pump (13.1) and the fourth shut-off valve (9.4) is connected to a second diaphragm pump (13.2) and where the source ionization chamber (2) and the receiver ionization chambers (1.1, 1.2) are each equipped with their own electronic device for continuous measuring and recording the radon concentration, and the source ionization chamber (2) is equipped with both a first shut-off and regulation valve (7.1) and a second shut-off and regulation valve (7.2), which are mutually interconnected by a hose via a third diaphragm pump (4) and the artificial source of radon (6), and of a sample with the source ionization chamber is also equipped a first valve (10.1) connected to the first input of electronic pressure difference sensor (3), while the first receiver ionization chamber (1.1) is equipped with a second valve (10.2) and the second receiver ionization chamber (1.2) is equipped with a third valve (10.3) connected to a second input of the electronic pressure difference sensor (3), and both the receiver ionization chambers (1.1, 1.2) are interconnected with an evaluation and control unit (5).

2. Device according to claim 1 **characterized by** the fact that it has a single electronic pressure difference sensor (3) and its second output allows disconnection from the second valve (10.2) or from the third valve (10.3).

3. Device according to claim 1 **characterized by** the fact that both the first receiver ionization chamber (1.1) and the second receiver ionization chamber (1.2) each have their own electronic pressure difference sensor (3).

4. Device according to claim 1 and any of claims 2 or 3 **characterized by** the fact that the first shut-off valve (9.1) is positioned opposite to the second shut-off valve (9.2) and/or the third shut-off valve (9.3) is positioned opposite to the fourth shut-off valve (9.4).

5. Device according to claim 1 and any of claims 2 to 4 **characterized by** the fact that the steel extension (12) is equipped with at least two bottom flanges (14.1, 14.2) for fixing the measured samples (8) and each receiver ionization chamber (1.1, 1.2) is equipped in its bottom part with top flange (15.1, 15.2) allowing connection to the bottom flange (14.1, 14.2).

6. Device according to claim 1 and any of claims 2 to 5 **characterized by** the fact that the interconnecting hoses between the first and second shut-off and regulation valves (7.1, 7.2) are made of material showing minimum radon transfer coefficient.

## Patentansprüche

1. Das Gerät für die Ermittlung des Radon-Diffusionskoeffizienten, bestehend aus einem Quellen- und einem Messteil, zwischen die die zu messende Probe eingelegt ist, sowie das mit einer Radon-Quelle versehen ist, **dadurch gekennzeichnet, dass** die Radon-Quelle mit einer künstlichen Radon-Quelle (6) gebildet ist, der Quellenteil mit einer Quellen-Ionisierungskammer (2) in der Durchfluss-Betriebsart gebildet ist und an diese ist über den Stahlansatz (12) für die Befestigung der zu messenden Proben (8) ein Messteil angeschlossen, der mindestens mit zwei Mess-Ionisierungskammern (1.1 und 1.2) in der Strombetriebsart gebildet ist, die im Bereich des leitfähigen Gehäuses über das hergestellte, leitfähige, das Erkennungsvolumen abschließende Gitter (11) verfügen, und die weiter mit den Absperrventilen, und zwar die erste Messlonisierungskammer (1.1) mit dem ersten Absperrventil (9.1) und dem zweiten Absperrventil (9.2) und die zweite Mess-Ionisierungskammer (1.2) mit dem dritten Absperrventil (9.3) und dem vierten Absperrventil (9.4) versehen sind, wo das erste Absperrventil (9.1) an die erste Membranpumpe (13.1) und das vierte Absperrventil (9.4) an die zweite Membranpumpe (13.2) angeschlossen sind und wo die Quellen-Ionisierungskammer (2), sowie die Mess-Ionisierungskammern (1.1, 1.2) jeweils über eine eigene elektronische Einheit für kontinuierliche Messung und Erfassung der Radon-Volumenaktivität verfügen und die Quellen-Ionisierungskammer (2) ist einerseits mit dem ersten Absperr- und Regelventil (7.1) und dem zweiten Absperr- und Regelventil (7.2), die untereinander mit einem Schlauch über die dritte Membranpumpe (4) und die künstliche Radon-Quelle (6) verbunden sind und andererseits mit dem ersten Ventil (10.1) zum Anschluss an einen Eingang des elektronischen Fühlers (3) der Druckdifferenz versehen, wobei die erste Mess-Ionisierungskammer (1.1) mit dem zweiten Ventil (10.2), sowie die zweite Mess-Ionisierungskammer (1.2) mit dem dritten Ventil (10.3) zum Anschluss an den zweiten Eingang des elektronischen Fühlers (3) der Druckdifferenz versehen ist, und beide Mess-Ionisierungskammern (1.1, 1.2) sind mit der Auswerte- und Steuereinheit (5) verbunden.

2. Das Gerät nach dem Anspruch 1, **dadurch gekennzeichnet, dass** dies über den einzigen elektronischen Fühler (3) der Druckdifferenz verfügt, dessen zweiter Eingang als abtrennbar vom zweiten Ventil (10.2) oder vom dritten Ventil (10.3) ausgeführt ist.

3. Das Gerät nach dem Anspruch 1, **dadurch gekennzeichnet, dass** die erste Mess-Ionisierungskammer (1.1), sowie die zweite Mess-Ionisierungskammer (1.2) über ihren eigenen elektronischen Fühler (3) der Druckdifferenz verfügt.

4. Das Gerät nach dem Anspruch 1 und nach jedwedem der Ansprüche 2 oder 3, **dadurch gekennzeichnet, dass** das erste Absperrventil (9.1) gegen das zweite Absperrventil (9.2) angebracht ist und/oder das dritte Absperrventil (9.3) gegen das vierte Absperrventil (9.4) angebracht ist.

5. Das Gerät nach dem Anspruch 1 und nach jedwedem der Ansprüche 2 bis 4, **dadurch gekennzeichnet, dass** der Stahlansatz (12) mindestens mit zwei unteren Flanschen (14.1, 14.2) für die Aufnahme der Proben (8) versehen ist und jede Mess-Ionisierungskammer (1,1, 1.2) ist in ihrem unteren Bereich mit dem oberen Flansch (15.1,15.2) für den Anschluss an den entsprechenden unteren Flansch (14.1, 14.2) versehen.

6. Das Gerät nach dem Anspruch 1 und nach jedwedem der Ansprüche 2 bis 5, **dadurch gekennzeichnet, dass** die Verbindungsschläuche zwischen den Ventilen aus dem Material mit dem minimalen Durchlass von Radon hergestellt sind.

## Revendications

1. L'appareil pour la détermination du coefficient de diffusion de radon qui consiste d'une partie de source et d'une partie de réception, entre lesquelles il est inséré un échantillon mesuré et puis, qui est équipé d'une source de radon dont la caractéristique essentielle est que la source de radon est formée d'une source artificielle (6) du radon, la partie de source est formée par une chambre d'ionisation de source (2) en mode flux à laquelle, via une extension métallique (12) pour la fixation des échantillons mesurés (8), il est attaché la partie de réception, qui consiste d'au moins deux chambres d'ionisation de réception (1.1 et 1.2) en mode courant, qui ont, dans la partie du revêtement électriquement conducteur, une grille électriquement conductrice (11) qui ferme le volume de détection et qui sont équipées des valves de fermeture de la façon suivante : la première chambre d'ionisation de détection (1.1) de la première valve de fermeture (9.1) et de la deuxième valve de fermeture (9.2) et la deuxième chambre d'ionisation de détection (1.2) de la troisième valve de fermeture (9.3) et de la quatrième valve de fermeture (9.4), où la première valve de fermeture (9.1) est connectée à la première pompe à membrane (13.1) et la quatrième valve de fermeture (9.4) est connectée à la deuxième pompe à membrane (13.2) où la chambre d'ionisation de source (2) et les chambres d'ionisation de réception (1.1, 1.2) ont chacune son propre dispositif électronique pour le mesurage continu et l'enregistrement de la concentration du radon et la chambre d'ionisation de source (2) est équipée de la première valve de fermeture et de régulation (7.1) et de la deuxième valve de fermeture et de régulation (7.2) qui sont mutuellement interconnectées par un tuyau flexible via la troisième pompe à membrane (4) et la source artificielle (6) du radon et de la première valve (10.1) pour la connexion à la première entrée du senseur électronique (3) de différence de pression, et la première chambre d'ionisation de réception (1.1) est équipée de la deuxième valve (10.2) et la deuxième chambre d'ionisation de réception (1.2) est équipée de la troisième valve (10.3) pour la connexion à la deuxième entrée du senseur électronique (3) de différence de pression, et les deux chambres d'ionisation de réception (1.1, 1.2) sont interconnectées avec une unité d'évaluation et de gestion (5).

2. L'appareil selon la revendication 1 **caractérisé par le fait qu'**il a un seul senseur électronique (3) de différence de pression, dont la deuxième entrée permet une déconnexion de la deuxième valve (10.2) ou de la troisième valve (10.3).

3. L'appareil selon la revendication 1 **caractérisé par le fait que** la première chambre d'ionisation de réception (1.1) et la deuxième chambre d'ionisation de réception (1.2) ont chacune son propre senseur électronique (3) de différence de pression.

4. L'appareil selon la revendication 1 et selon n'importe quelle revendication des revendications 2 ou 3 **caractérisé par le fait que** la première valve de fermeture (9.1) est située à l'opposé de la deuxième valve de fermeture (9.2) et/ou la troisième valve de fermeture (9.3) est située à l'opposé de la quatrième valve de fermeture (9.4).

5. L'appareil selon la revendication 1 et selon n'importe quelle revendication des revendications 2 à 4 **caractérisé par le fait que** l'extension métallique (12) est équipée d'au moins deux semelles inférieures (14.1, 14.2) pour la fixation des échantillons (8) et chaque chambre d'ionisation de réception (1,1, 1.2) est équipée d'une semelle supérieure dans sa partie inférieure (15.1,15.2) pour la connexion à la semelle inférieure correspondante (14.1, 14.2).

6. L'appareil selon la revendication 1 et selon n'importe quelle revendication des revendications 2 à 5 **caractérisé par le fait que** les tuyaux flexibles d'interconnexion entre les valves sont faits du matériau de perméabilité de radon minimale.
